(19) Europäisches Patentamt
European Patent Office
Office européen des brevets

(11) **EP 4 787 068 A1**

(12) **EUROPEAN PATENT APPLICATION**

(43) Date of publication:
05.08.2026 Bulletin 2026/32

(21) Application number: 26151894.8

(22) Date of filing: **14.01.2026**

(51) International Patent Classification (IPC):
*G02F 1/21* (2006.01)   *G02B 6/12* (2006.01)
*G02F 1/225* (2006.01)   *G06F 17/16* (2006.01)
*G06N 3/067* (2006.01)   *G06E 3/00* (2006.01)

(52) Cooperative Patent Classification (CPC):
**G02F 1/212; G02B 6/12002; G02B 6/12007;
G02B 6/125; G02F 1/225; G06E 3/008;
G06F 17/16; G06N 3/0675;** G02B 2006/12159

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.01.2025 DE 102025103244**

(71) Applicant: **Q.ant GmbH**
**70565 Stuttgart (DE)**

(72) Inventors:
• **ABT, Andreas**
**79292 Pfaffenweiler (DE)**
• **RUIZ, Alejandro Lorenzo**
**70563 Stuttgart (DE)**

(74) Representative: **DREISS Patentanwälte PartG
mbB
Friedrichstraße 6
70174 Stuttgart (DE)**

(54) **PHOTONIC INTEGRATED CIRCUIT FOR PERFORMING MATRIX- MATRIX MULTIPLICATION**

(57)     The invention relates to a photonic integrated circuit (10) for performing matrix-matrix multiplication with some features according to claim 1.

Fig.1

EP 4 787 068 A1

**Description**

The invention relates to a photonic integrated circuit for performing matrix-matrix multiplication with some features according to claim 1.

Matrix-matrix multiplication is an important application for photonic integrated circuits. For this usually crossbar-array and systolic architectures are used.

The disadvantage of this is that the structures become large and complex. A large amount of crossings between the waveguides is needed. This leads to potential interference problems and thus degrading the quality of signal, difficulting routing and limiting the scalability of the system.

It is therefore the task of the present invention to provide a photonic integrated circuit for performing matrix-matrix multiplications, whereby the above disadvantages are eliminated.

The above task is solved by a photonic integrated circuit with the features of claim 1. The photonic integrated circuit is configured for matrix-matrix multiplication.

The photonic integrated circuit comprises a first layer, a second layer, a plurality of first waveguides and a plurality of second waveguides. The second layer is arranged on top of the first layer. The plurality of first waveguides is arranged within the first layer, wherein there are no crossings between the plurality of first waveguides, in particular in the top view. The plurality of second waveguides is arranged within the second layer, wherein there are no crossings between the plurality of second waveguides, in particular in the top view.

The photonic integrated circuit comprises at least two coupling positions. The at least two coupling positions can be designed as vertical coupling positions. At at least one, in particular at each, coupling position at least one first waveguide is coupled to at least one second waveguide. In particular, a coupling position is designed for a transition (an optical signal) from the first layer to the second layer.

The photonic integrated circuit comprises at least four modulators coupled by first waveguides and second waveguides for multiplying and/or adding of matrix values of matrices to be multiplied together.

This allows to reduce the complexity of the design and size of the photonic integrated circuit. Crossings can be avoided or at least reduced. Interference problems and degrading of the quality of signal can be avoided or at least reduced. The limitation of scaling can be canceled or at least reduced.

In the present application, "coupling" means optical coupling, i.e. a coupling of an optical signal.

According to an embodiment of the photonic integrated circuit there may be at least one crossing between first waveguides and second waveguides, in particular in the top view.

This allows a compact and easy design of the photonic integrated circuit.

According to an embodiment of the photonic integrated circuit at least one modulator may be designed as a Mach-Zehnder interferometer. In particular, all modulators may be designed as Mach-Zehnder interferometers.

This allows the modulators to be implemented with simple means.

According to an embodiment of the photonic integrated circuit at least two modulators, in particular all modulators, are arranged within the first layer or within the second layer.

This allows the modulators to be implemented with simple means.

According to an embodiment of the photonic integrated circuit each modulator may have an input and an output for optical signals. The photonic integrated circuit may have at least one signal input. The signal input may be coupled with inputs of at least two modulators by first waveguides.

This allows to couple an optical signal into the modulators with simple means.

According to an embodiment of the photonic integrated circuit the photonic integrated circuit may have at least one signal output. The signal output may be coupled with outputs of at least two modulators by second waveguides. Alternatively, or additionally the signal output may be coupled with outputs of at least two modulators by first waveguides and second waveguides.

This allows to output an optical signal from the modulators with simple means.

According to an embodiment of the photonic integrated circuit the photonic integrated circuit may comprise nine modulators. The optical signal input may be coupled with inputs of at least three modulators by first waveguides.

This allows a compact and simple design of the photonic integrated circuit for performing matrix-matrix multiplication of 3x3 matrices. With nine modulators 15 operations per clock are possible. It is also possible to multiply bigger matrices than 3x3. For multiplying a 3x3 matrix three clocks are needed, but for multiplying a 4x4 matrix eight clocks are needed.

According to an embodiment of the photonic integrated circuit the optical signal output may be coupled with outputs of at least three modulators by second waveguides.

This allows a compact and simple design of the photonic integrated circuit for performing matrix-matrix multiplication of 3x3 matrices.

According to the invention first waveguides are formed from a first material and second waveguides are formed from a second material. The first material and the second material are different.

This allows a simple and efficient coupling between first and second waveguides.

According to an embodiment of the photonic integrated circuit, first material may be lithium niobate. Alternatively, or additionally the second material can be silicon nitride. Other materials are also conceivable.

This allows to implement first and second waveguides with simple means.

According to an embodiment of the photonic integrated circuit at at least one the coupling position the first waveguide may have a first coupling section and the second waveguide may have a second coupling section. The first and the second coupling sections may be tapered in opposite directions, in particular towards each other.

This allows to implement a coupling between first and second waveguides with simple means.

Further features, details and advantages of the invention are apparent from the wording of the claims and from the following description of embodiments with reference to the drawings. It shows schematically:

Fig. 1    a photonic integrated circuit for performing matrix-matrix multiplication according to a first embodiment;

Fig. 2    the photonic integrated circuit according to a second embodiment;

Fig. 3    the photonic integrated circuit according to a third embodiment;

Fig. 4    a sectional view of a coupling position of the photonic integrated circuit;

Fig. 5    a top view of the coupling position according to Fig. 4.

In the following description and in the figures, corresponding components and elements have the same reference signs. For the sake of clarity, not all reference signs are shown in all figures.

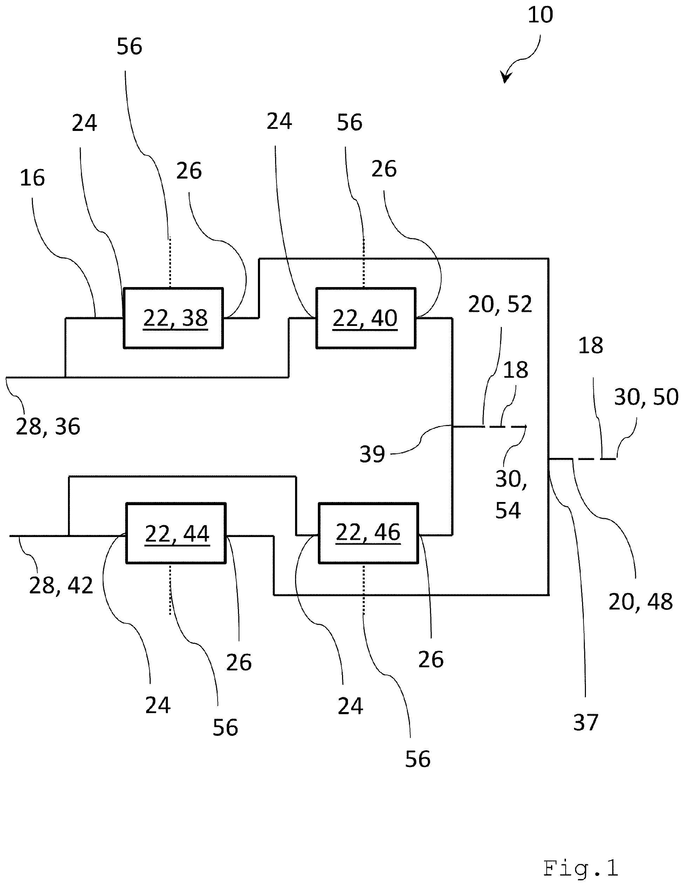

Figure 1 shows schematically a photonic integrated circuit 10 for performing matrix-matrix multiplication according to a first embodiment. Figure 1 shows a schematic top view.

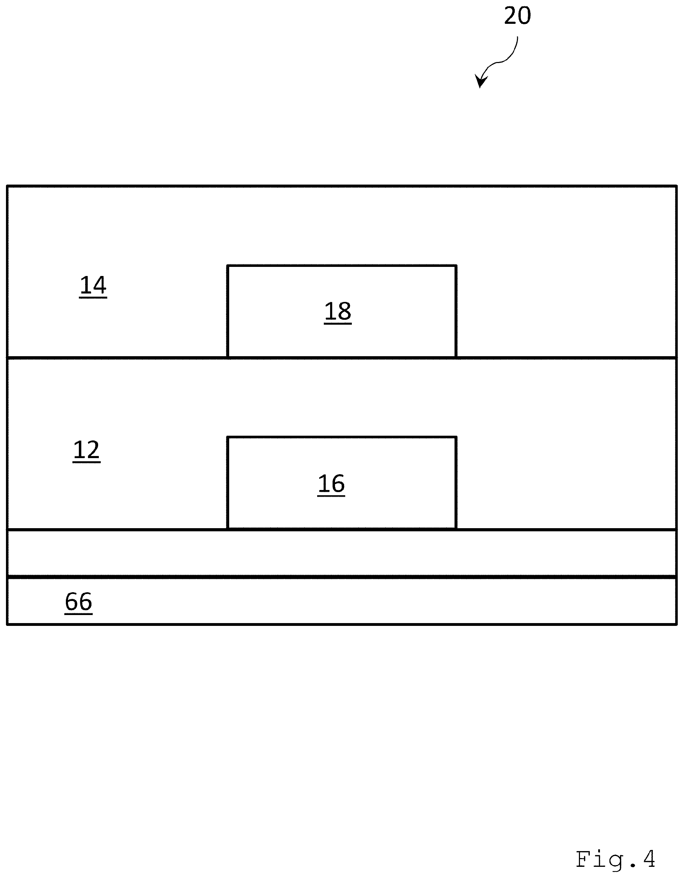

The photonic integrated circuit 10 comprises a first layer 12 and a second layer 14 (see Fig. 4). The second layer 14 is arranged on top of the first layer 12 (as shown in Fig. 4).

The photonic integrated circuit 10 comprises a plurality of first waveguides 16 and a plurality of second waveguides 18. The plurality of first waveguides 16 is arranged within the first layer 12. There are no crossings between the plurality of first waveguides 16, in particular in the top view. The plurality of second waveguides 18 is arranged within the second layer 14. There are no crossings between the plurality of second waveguides 18, in particular in the top view.

The plurality of first waveguides 16 and second waveguides 18 may be arranged in two planar levels on top of each other and at a distance from each other. In particular in the sectional view there may be a distance between first waveguides 16 and second waveguides 18.

The photonic integrated circuit 10 comprises at least two coupling positions 20. One first waveguide 16 is coupled to one second waveguide 18 at at least one, in particular at each, coupling positions 20.

The photonic integrated circuit 10 comprises at least four modulators 22 coupled by first waveguides 16 and second waveguides 18 for multiplying and/or adding of matrix values of matrices to be multiplied together.

There may be at least one crossing between first waveguides 16 and second waveguides 18, in particular in the top view.

At least one modulator 22 may be designed as a Mach-Zehnder interferometer. In particular, all modulators may be designed as Mach-Zehnder interferometers.

At least two modulators 22, in particular all modulators 22, can be arranged within the first layer 12 or the second layer 14.

Each modulator 22 may have an input 24 and an output 26 for optical signals. The photonic integrated circuit 10 may have at least one signal input 28. The signal input 28 may be coupled with inputs 24 of at least two modulators 22 by first waveguides 16.

The photonic integrated circuit 10 may have at least one signal output 30. The signal output 30 may be coupled with outputs 26 of at least two modulators 22 by second waveguides 18 or by first and second waveguides 16, 18.

The photonic integrated circuit 10 may have nine modulators 22. The optical signal input 28 may be coupled with inputs 24 of at least three modulators 22 by first waveguides 16. The optical signal output 30 may be coupled with outputs 26 of at least three modulators 22 by second waveguides 18.

In Figures 1 to 3 first waveguides 16 are illustrated by solid lines, second waveguides 18 are illustrated by dashed lines and electrical signals are illustrated by dotted lines.

In the embodiment of Fig. 1 the photonic integrated circuit 10 has two signal inputs 28, two signal outputs 30, four modulators 22 and two coupling positions 20. A first signal input 36 is coupled with the inputs 24 of a first modulator 38 and a second modulator 40 by first waveguides 16. A second signal input 42 is coupled with the inputs 24 of a third modulator 44 and a fourth modulator 46 by first waveguides 16.

The outputs 26 of the first modulator 38 and the third modulator 44 are coupled together by first waveguides 16 at a first position 37. The first position 37 is coupled by a first waveguide 16 to a second waveguide 18 at a first coupling position 48. The second waveguide 18 couples the first coupling position 48 with a first signal output 50.

The outputs 26 of the second modulator 40 and the fourth modulator 46 are coupled together by first waveguides 16 at a second position 39. The second position 39 is coupled by a first waveguide 16 to a second waveguide 18 at a second coupling position 52. The second waveguide 18 couples the second coupling position 52 with a second signal output 54.

With the embodiment of Fig. 1 two cycles are required to multiply two 2x2 matrices together. For performing the following multiplication

$$\begin{pmatrix} A & B \\ C & D \end{pmatrix} \times \begin{pmatrix} K & L \\ M & N \end{pmatrix} = \begin{pmatrix} AK + BM & AL + BN \\ CK + DM & CL + DN \end{pmatrix}$$

$A$ is set to the first signal input 36 and B is set to the second signal input 42 in the first cycle. C is set to the first signal input 36 and D is set to the second signal input 42 in the second cycle.

$K$ is set to the first modulator 38 by an electrical signal 56, $L$ is set to the second modulator 40, M is set to the third modulator 44 and N is set to the fourth modulator 46.

The outcome at the first signal output 50 is $AL + BN$ for the first cycle and $CL + DN$ for the second cycle. The outcome at the second signal output 54 is $AK + BM$ for the first cycle and $CK + DM$ for the second cycle.

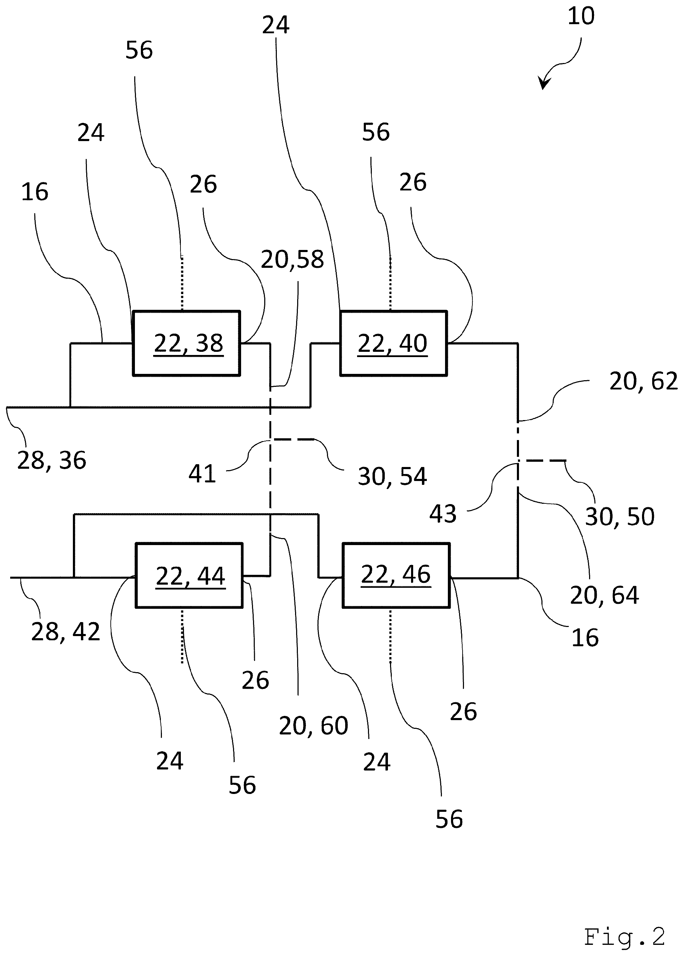

Figure 2 shows schematically the photonic integrated circuit according to a second embodiment. Figure 2 shows a schematic top view. The second embodiment differs from the first embodiment by the following:

The photonic integrated circuit 10 has four coupling positions 20. The output 26 of the first modulator 38 is coupled by a first waveguide 16 to a second waveguide 18 at a third coupling position 58. The output 26 of the third modulator 44 is coupled by a first waveguide 16 to a second waveguide 18 at a fourth coupling position 60. The second waveguides 18 that are coupled to first modulator 38 and third modulator 44 by first waveguides 16 are coupled together at a third position 41. The second signal output 54 is coupled to the third position 41 by a second waveguide 18.

The output of the second modulator 40 is coupled by a first waveguide 16 to a second waveguide 18 at a fifth coupling position 62. The output 26 of the fourth modulator 46 is coupled by a first waveguide 16 to a second waveguide 18 at a sixth coupling position 64. The second waveguides 18 that are coupled to the second modulator 40 and fourth modulator 46 by first waveguides 16 are coupled together at a fourth position 43. The first signal output 50 is coupled to the fourth position 43 by a second waveguide 18.

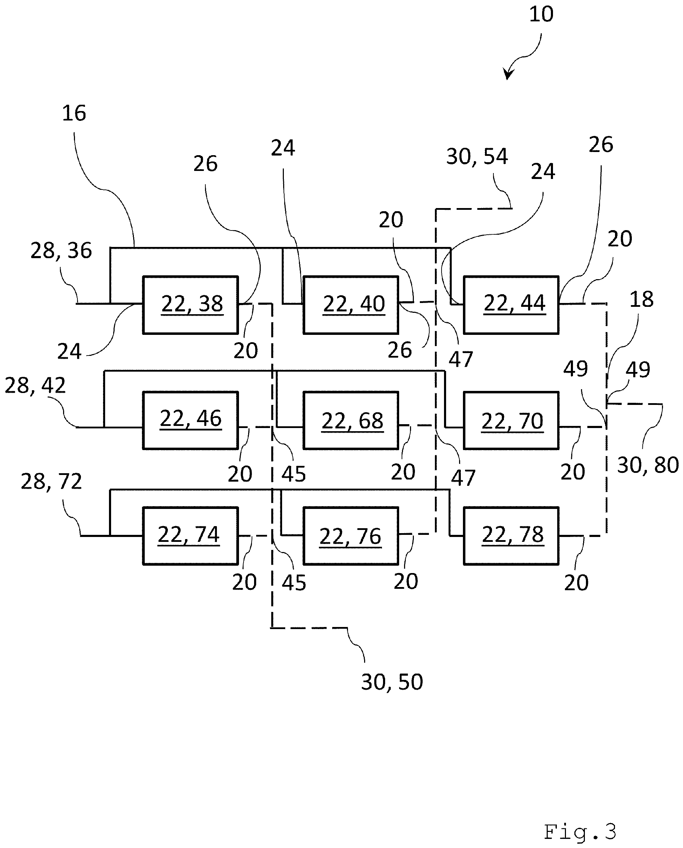

Figure 3 shows schematically the photonic integrated circuit according to a third embodiment. Figure 3 shows a schematic top view. The third embodiment differs from the first embodiment by the following:

The photonic integrated circuit 10 has three signal inputs 28, three signal outputs 30, nine modulators 22 and nine coupling positions 20.

The first signal input 36 is coupled to the inputs 24 of the first modulator 38, the second modulator 40 and the third modulator 44. The second signal input 42 is coupled to the inputs 24 of the fourth modulator 46, a fifth modulator 68 and a sixth modulator 70. A third signal input 72 is coupled to the inputs 24 of a seventh modulator 74, an eighth modulator 76 and a ninth modulator 78. Each signal input 36, 42, 72 is coupled to the inputs 24 of the respective modulators 38, 40, 44, 46, 68, 70, 74, 76, 78 by first waveguides 16. The outputs 26 of the nine modulators 38, 40, 44, 46, 68, 70, 74, 76, 78 are each coupled by a first waveguide 16 to a second waveguide 18 at the nine coupling positions 20.

The second waveguides 18 that are coupled with the outputs 26 of the first modulator 38, the fourth modulator 46 and the seventh modulator 74 are coupled together at two fifth positions 45 and are coupled to the first signal output 50.

The second waveguides 18 that are coupled with the outputs 26 of the second modulator 40, the fifth modulator 68 and the eighth modulator 76 are coupled together at two sixth positions 47 and are coupled to the second signal output 54.

The second waveguides 18 that are coupled with the outputs 26 of the third modulator 44, the sixth modulator 70 and the ninth modulator 78 are coupled together at two seventh positions 49 and are coupled to a third signal output 80.

With the embodiment of Fig. 3 the multiplication of two 3x3 matrices is possible:

$$A \ x \ B$$

with

$$A = \begin{pmatrix} a_{11} \ a_{12} \ a_{13} \ a_{21} \ a_{22} \ a_{23} \ a_{31} \ a_{32} \ a_{33} \end{pmatrix}$$

and

$$B = (b_{11} \ b_{12} \ b_{13} \ b_{21} \ b_{22} \ b_{23} \ b_{31} \ b_{32} \ b_{33})$$

The matrix values of A are set to three signal inputs 28 within three cycles. In the first cycle $a_{11}$, $a_{12}$, $a_{13}$ are set to the three signal inputs, $a_{11}$ is set to the first signal input 28, $a_{12}$ is set to the second signal input 28 and $a_{13}$ is set to the third signal input 28 in the first cycle.

The matrix values of B are set to the modulators 22 by electrical signals, a corresponding $b_{xx}$ for each modulator 22. The first cycle produce

$$a_{11}b_{12} + a_{12}b_{22} + a_{13}b_{32}$$

at a first signal output 30

$$a_{11}b_{13} + a_{12}b_{23} + a_{13}b_{33}$$

at a second signal output 30 and

$$a_{11}b_{1} + a_{12}b_{21} + a_{13}b_{31}$$

at a third signal output 30. The second and the third cycles can be executed accordingly.

Figure 4 shows schematically a sectional view of a coupling position 20 of the photonic integrated circuit 10.

The first layer 12 may be made from silicon dioxide ($SiO_2$). The first layer may be arranged on a silicon substrate 66. The second layer 14 may be arranged on top (above) the first layer 12. The second layer 14 may be made from silicon dioxide ($SiO_2$).

The first waveguides 16 and the second waveguides 18 may be spaced to each other and/or above each other. The first waveguides 16 may be formed from a first material. The second waveguides 18 may be formed from a second material. The first material and the second material may be different materials.

The first material may be lithium niobate. The second material may be silicon nitride. Other materials may be also conceivable.

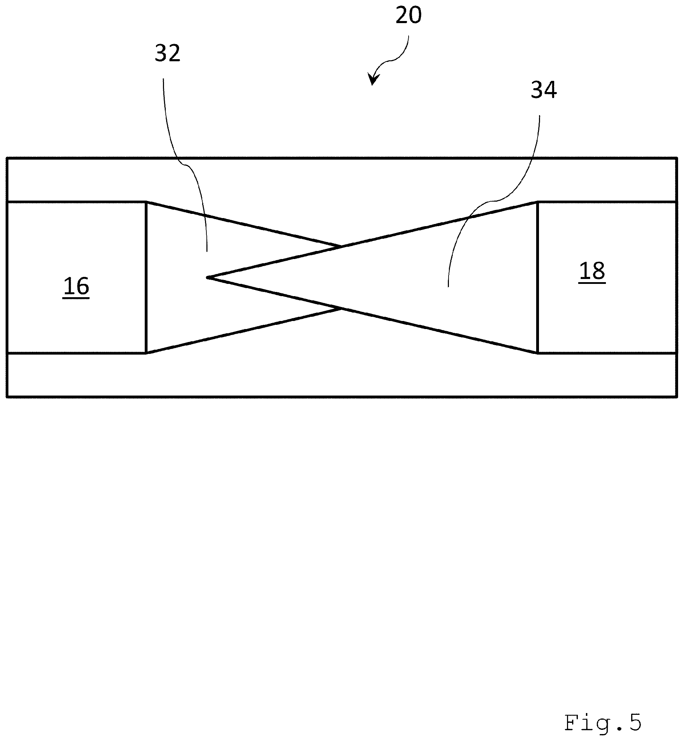

Figure 5 shows schematically a top view of the coupling position 20 of the photonic integrated circuit 10 according to Fig. 4.

At the coupling position 20 the first waveguide 16 may have a first coupling section 32 and the second waveguide 18 may have a second coupling section 34. The first and the second coupling sections 32, 34 are tapered in opposite directions, in particular towards each other.

**Claims**

1. Photonic integrated circuit (10) for performing matrix-matrix multiplication comprising

   - a first layer (12),
   - a second layer (14), arranged on top of the first layer (12)
   - a plurality of first waveguides (16) arranged within the first layer (12), wherein there are no crossings between the plurality of first waveguides (16), in particular in the top view,
   - a plurality of second waveguides (18) arranged within the second layer (14), wherein there are no crossings between the plurality of second waveguides (18), in particular in the top view,
   - at least two coupling positions (20), wherein at least one first waveguide (16) is coupled to at least one second waveguide (18) at at least one coupling position (20),
   - at least four modulators (22) coupled by first waveguides (16) and second waveguides (18) for multiplying and/or adding of matrix values of matrices to be multiplied together, wherein first waveguides (16) are formed from a first material and second waveguides (18) are formed from a second material, wherein the first material and the second material are different.

2. Photonic integrated circuit (10) according to claim 1, **characterized in that** there is at least one crossing between first waveguides (16) and second waveguides (18), in particular in the top view.

3. Photonic integrated circuit (10) according to claim 1 or 2, **characterized in that** at least one modulator (22), in particular all modulators (22), is designed as a Mach-Zehnder interferometer.

4. Photonic integrated circuit (10) according to any one of preceding claims, **characterized in that** at least two modulators (22), in particular all modulators (22), are arranged within the first layer (12) or the second layer (14).

5. Photonic integrated circuit (10) according to any one of preceding claims, **characterized in that** each modulator (22) has an input (24) and an output (26) for optical signals, wherein the photonic integrated circuit (10) has at least one signal input (28), wherein the signal input (28) is coupled with inputs (24) of at least two modulators (22) by first waveguides (16).

6. Photonic integrated circuit (10) according to the preceding claim, **characterized in that** the photonic integrated circuit (10) has at least one signal output (30), wherein the signal output (30) is coupled with outputs (26) of at least two modulators (22) by second waveguides (18) or by first and second waveguides (16, 18).

7. Photonic integrated circuit (10) according to the preceding claim, **characterized in that** the photonic integrated circuit (10) comprises nine modulators (22), wherein the optical signal input (28) is coupled with inputs (24) of at least three modulators (22) by first waveguides (16).

8. Photonic integrated circuit (10) according to the preceding claim, **characterized in that** the optical signal output (30) is coupled with outputs (26) of at least three modulators (22) by second waveguides (18).

9. Photonic integrated circuit (10) according to any one of the preceding claims, **characterized in that** the first material is lithium niobate and/or the second material is silicon nitride.

10. Photonic integrated circuit (10) according to any one of preceding claims, **characterized in that** at at least one coupling position (20) the first waveguide (16) has a first coupling section (32) and the second waveguide (18) has a second coupling section (34), wherein the first and the second coupling sections (32, 34) are tapered in opposite directions, in particular towards each other.

Fig.1

Fig.2

EP 4 787 068 A1

Fig.3

9

20

| | |
|---|---|
| 14 | 18 |
| 12 | 16 |
| 66 | |

Fig.4

Fig.5

Europäisches
Patentamt

European
Patent Office

Office européen
des brevets

## EUROPEAN SEARCH REPORT

**Application Number**

EP 26 15 1894

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/078422 A1 (MENG HUAIYU [US] ET AL) 7 March 2024 (2024-03-07) * paragraph [0037] * * paragraph [0048] * * paragraph [0597] * * paragraph [0674] - paragraph [0676] * * paragraph [0678] - paragraph [0680] * * Page number 38 * * Page number 37 * * Page number 36 * ----- | 1-10 | INV. G02F1/21 G02B6/12 G02F1/225 G06F17/16 G06N3/067 ADD. G06E3/00 |
| X | US 2021/325924 A1 (CABLE HUGO [US]) 21 October 2021 (2021-10-21) * paragraph [0067] - paragraph [0070] * * paragraph [0092] * * paragraph [0101] * * paragraph [0182] * * Page number 6 * ----- | 1 | |

**TECHNICAL FIELDS SEARCHED (IPC)**

G02F
G06F
G02B
G06E
G06N

The present search report has been drawn up for all claims

| Place of search | Date of completion of the search | Examiner |
|---|---|---|
| The Hague | 29 May 2026 | Topak, Eray |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## EP 4 787 068 A1

## ANNEX TO THE EUROPEAN SEARCH REPORT
## ON EUROPEAN PATENT APPLICATION NO.

EP 26 15 1894

29-05-2026

| Patent document cited in search report | Publication date | Patent family member(s) | Publication date |
|---|---|---|---|
| US 2024078422 A1 | 07-03-2024 | US 2021201126 A1<br>US 2024078422 A1 | 01-07-2021<br>07-03-2024 |
| US 2021325924 A1 | 21-10-2021 | US 2021325605 A1<br>US 2021325924 A1 | 21-10-2021<br>21-10-2021 |

EPO FORM P0459